(19) Europäisches Patentamt
European Patent Office
Office européen des brevets

(11) **EP 4 422 120 A1**

(12) **EUROPEAN PATENT APPLICATION**

(43) Date of publication:
**28.08.2024 Bulletin 2024/35**

(21) Application number: **23158842.7**

(22) Date of filing: **27.02.2023**

(51) International Patent Classification (IPC):
**H04L 9/08** (2006.01)    **H04L 9/14** (2006.01)
**H04B 10/85** (2013.01)

(52) Cooperative Patent Classification (CPC):
**H04L 9/0847; H04B 10/272; H04B 10/85;
H04L 9/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventors:
• **Sillis, Yannick**
  **2980 Zoersel (BE)**
• **Thomas, David**
  **1390 Grez-Doiceau (BE)**

(74) Representative: **IP HILLS NV
Bellevue 5/501
9050 Gent-Ledeberg (BE)**

(54) **SECURE IDENTIFIER EXCHANGE IN AN OPTICAL NETWORK**

(57)    Example embodiments describe an optical line terminal (211), OLT, configured to communicate in a point-to-multipoint optical network (210) with optical network units (213, 214, 215), ONUs; wherein the OLT and a respective ONU share a set of shared keys. The OLT comprising means configured to perform receiving (201), from a respective ONU, at least one identifier (220) encrypted according to a preconfigured encryption algorithm and a preconfigured key; wherein the at least one identifier is characteristic for the respective ONU. The means further configured to perform decrypting (202) the at least one received identifier according to the preconfigured encryption algorithm and the preconfigured key; and determining (203) at least one shared key (222) based on the at least one decrypted identifier (221).

Fig. 2

EP 4 422 120 A1

## Description

## Technical Field

Various example embodiments relate to network security of point-to-multipoint optical networks, in particular to determining shared keys during an authentication procedure.

## Background

In a point-to-multipoint optical network such as a passive optical network, PON, an optical line terminal, OLT, at the network side connects to a plurality of optical network units, ONUs, at the user side. A respective ONU typically establishes a secure communication channel with the OLT during an authentication process. During such an authentication process, one or more shared keys are derived based on credentials associated with the respective ONU. To this end, the ONU's credentials are typically transmitted upstream to the OLT without encryption, i.e. in the clear. This has the problem that intercepting the transmitted credentials allows generating one or more shared keys, thereby compromising the security of the optical network.

## Summary

The scope of protection sought for various embodiments of the invention is set out by the independent claims.
The embodiments and features described in this specification that do not fall within the scope of the independent claims, if any, are to be interpreted as examples useful for understanding various embodiments of the invention.
Amongst others, it is an object of embodiments of the invention to improve the network security of an optical network.
This object is achieved, according to a first example aspect of the present disclosure, by an optical line terminal, OLT, configured to communicate in a point-to-multipoint optical network with optical network units, ONUs; wherein the OLT and a respective ONU share a set of shared keys. The OLT comprising means configured to perform receiving, from a respective ONU, at least one identifier encrypted according to a preconfigured encryption algorithm and a preconfigured key; wherein the at least one identifier is characteristic for the respective ONU. The means further being configured to perform decrypting the at least one received identifier according to the preconfigured encryption algorithm and the preconfigured key; and determining at least one shared key based on the at least one decrypted identifier.
The set of shared keys may include a master session key, MSK, and one or more derived shared keys. A derived shared key may be any encryption key that is determined directly or indirectly from the master session key such as, for example, a session key, SK; an ONU management control interface integrity key, OMCI_IK; a physical layer operation administration and maintenance integrity key, PLOAM_IK; and a key encryption key, KEK. The set of shared keys allows establishing a secure communication channel between the OLT and the respective ONUs, e.g. by encrypting exchanged data according to an encryption algorithm and a shared key.
The at least one identifier may be any characteristic that allows to identify a respective ONU. The at least one identifier is encrypted according to a preconfigured encryption algorithm and a preconfigured key. The at least one identifier may, for example, be encrypted by the respective ONU before being transmitted to the OLT. The preconfigured encryption algorithm allows generating an encrypted output based on the preconfigured key. The preconfigured encryption algorithm is only known to the OLT and the respective ONUs. The preconfigured encryption algorithm may, for example, be an encryption algorithm according to the Advanced Encryption Standard, AES, or the Data Encryption Standard, DES. The preconfigured key may be a string of numbers and/or letters only known to the OLT and the ONU, e.g. a 128-bit value.
The preconfigured encryption algorithm and the preconfigured key are configured in advance into the OLT and into the respective ONUs, i.e. before provisioning or activating a respective ONU. This allows avoiding time-consuming and operationally complex provisioning processes, as the encryption algorithm and key are configured into the OLT and the respective ONUs before provisioning the ONUs in an optical network.
By decrypting the at least one encrypted identifier, at least one decrypted identifier is obtained by the OLT. One or more shared keys can then be determined by the OLT based on the at least one decrypted identifier. This improves the network security of the optical network as intercepting the encrypted at least one identifier does not allow to generate any shared keys, thereby making eavesdropping ineffective. It is an advantage that this can be easily incorporated into existing optical networks without substantial operational changes to the ONU provisioning process.
According to an example embodiment, the at least one identifier may comprise a registration identifier characteristic for the respective ONU.
The registration identifier, also Registration_ID, may be a string of numbers and/or letters assigned to an ONU on the management level that allows to identify the ONU within an optical network. The registration identifier may, for example, be a string of ASCII characters having a length of 36 octets. The registration identifier may thus be encrypted according to the preconfigured encryption algorithm and the preconfigured key. This encrypting may be performed by an ONU before transmitting the encrypted registration identifier upstream, i.e. to the OLT. In other words, the OLT may receive an encrypted registration identifier from a respective ONU. One or more different encrypted identifiers may further be received by the OLT in addition to the registration identifier.

According to an example embodiment, the means may further be configured to perform determining a master session key based on the decrypted registration identifier.

The at least one shared key that is determined by the OLT may thus include the master session key. The master session key can be determined based on the registration identifier received and decrypted by the OLT. The master session key is a shared value between the OLT and a respective ONU as a result of an authentication procedure. The master session key may serve as a starting point for directly or indirectly determining derived shared keys which are used in subsequent secure data exchange, i.e. the other shared keys in the set of shared keys. Determining the master session key based on a securely exchanged, i.e. encrypted, registration identifier allows secure determination of the other shared keys, as the master session key is used to determine the other shared keys.

According to an example embodiment, the at least one identifier may comprise a serial number characteristic for the respective ONU.

The serial number allows identifying a particular ONU within an optical network. In particular, the serial number can be used to address the ONU when an ONU-ID is unavailable or unreliable. The serial number may include a vendor identifier, also Vendor_ID, and/or a vendor-specific serial number, VSSN. The serial number may, for example, be a string of ASCII characters. The serial number may thus be encrypted according to the preconfigured encryption algorithm and the preconfigured key. This encrypting may be performed by an ONU before transmitting the encrypted serial number upstream, i.e. to the OLT. In other words, the OLT may receive an encrypted serial number from a respective ONU. One or more different encrypted identifiers may further be received by the OLT in addition to the serial number.

According to an example embodiment, the means may be configured to perform determining one or more shared keys based on the decrypted serial number and a master session key.

The at least one shared key that is determined by the OLT may thus include one or more derived shared keys, e.g. a session key and/or a key encryption key. The one or more shared keys can be determined based on the serial number received and decrypted by the OLT, and based on a master session key. This master session key may have been determined based on an encrypted registration identifier that was received and decrypted by the OLT, i.e. based on a registration identifier that was transmitted upstream in encrypted form. Alternatively, the master session key may have been determined based on an unencrypted registration identifier, i.e. a registration identifier transmitted upstream in the clear.

Alternatively, the encrypted registration identifier and the encrypted serial number may both be received by the OLT simultaneously, e.g. within the same upstream signal. In this case, the master session key may first be determined based on the decrypted registration identifier. Hereafter, the determined master session key may then be used to determine one or more shared keys based on the decrypted serial number.

According to an example embodiment, the preconfigured key and the preconfigured encryption algorithm may be identical for the ONUs and the OLT within the point-to-multipoint network.

In other words, the same preconfigured key and preconfigured encryption algorithm may be shared between the OLT and the different ONUs within the optical network. This has the advantage that it further reduces the operational complexity of the optical network.

According to an example embodiment, the preconfigured encryption algorithm and/or the preconfigured key may be configurable for the OLT and the respective ONUs.

The preconfigured encryption algorithm and/or the preconfigured key may thus be adjusted for the respective ONUs within the optical network. This allows using different preconfigured encryption algorithms and/or preconfigured keys for the respective ONUs or for respective groups of ONUs. This has the further advantage that it can improve the network security of the optical network.

According to an example embodiment, the means may further be configured to, for a respective ONU, select a preconfigured encryption algorithm and/or a preconfigured key; and to provide the selected preconfigured encryption algorithm and/or the selected preconfigured key to the respective ONU.

The OLT may thus select or choose a preconfigured encryption algorithm and/or a preconfigured key for a respective ONU from a plurality of preconfigured encryption algorithms and/or a plurality of preconfigured keys. The OLT may, for example, perform this selecting during ONU activation. To this end, the OLT and the respective ONUs may keep a plurality of preconfigured encryption algorithms and/or preconfigured keys in memory. This plurality of preconfigured encryption algorithms and/or preconfigured keys may thus be configured into the OLT and the respective ONUs in advance, i.e. before provisioning or activating the respective ONUs. This can further improve the network security of the optical network without substantially increasing the operational complexity of ONU provisioning.

The OLT may then provide or communicate the selected preconfigured encryption algorithm and/or the selected preconfigured key to the respective ONUs. The selected preconfigured encryption algorithm and/or preconfigured key may be provided to the respective ONU by means of a control message such as, for example, a physical layer operations administration and maintenance, PLOAM, message.

According to an example embodiment, the means may further be configured to provide, to the respective ONU, an encryption reference indicative for the selected preconfigured encryption algorithm and/or a key reference indicative for the selected preconfigured key.

The encryption reference and the key reference may, for example, be a string of numbers and/or letters indicative for the selected preconfigured encryption algorithm and preconfigured key, respectively. For example, the key reference may be an index of a list comprising a plurality of possible preconfigured keys. Providing the encryption reference and/or the key reference allows secure exchange of the selected preconfigured encryption algorithm and/or preconfigured key to a respective ONU, as the selected encryption algorithm and/or key can not be deduced by intercepting control messages.

According to an example embodiment, the means may comprise at least one processor, and at least one memory including computer program code; the at least one memory and computer program code being configured to, with the at least one processor, cause the performance of the OLT according to example embodiments.

According to a second example aspect, an optical network unit, ONU, is disclosed configured to communicate in a point-to-multipoint optical network with an optical network terminal, OLT according to the first example aspect; wherein the OLT and the ONU share a set of shared keys. The ONU comprising means configured to perform encrypting at least one identifier according to a preconfigured encryption algorithm and a preconfigured key, wherein the at least one identifier is characteristic for the ONU. The means further being configured to perform sending the encrypted at least one identifier to the OLT; and determining at least one shared key based on the at least one identifier.

According to a third example aspect, a method is disclosed comprising:

- encrypting at least one identifier according to a preconfigured encryption algorithm and a preconfigured key by an optical network unit, ONU, configured to communicate in a point-to-multipoint optical network with an optical network terminal, OLT; wherein the OLT and the ONU share a set of shared keys; and wherein the at least one identifier is characteristic for the ONU;
- by the OLT, receiving the encrypted at least one identifier from the ONU; and decrypting the at least one received identifier according to the preconfigured encryption algorithm and the preconfigured key; and
- determining, by the OLT, at least one shared key based on the at least one decrypted identifier; and
- determining, by the ONU, the at least one shared key based on the at least one identifier.


**Brief Description of the Drawings**

Some example embodiments will now be described with reference to the accompanying drawings.

Fig. 1 shows a schematic block diagram of an example point-to-multipoint optical network 100;

Fig. 2 shows an example embodiment of an optical line terminal, OLT, comprising means configured to perform steps according to example embodiments;

Fig. 3 shows steps performed by an optical line terminal, OLT, and an optical network unit, ONU, for determining a master session key based on an encrypted registration identifier, according to example embodiments;

Fig. 4 shows steps performed by an optical line terminal, OLT, and an optical network unit, ONU, for determining one or more shared keys based on an encrypted serial number and a master session key, according to example embodiments;

Fig. 5 shows steps performed by an optical line terminal, OLT, and an optical network unit, ONU, wherein one or more shared keys are determined based on a master session key precedingly determined based on an encrypted registration identifier;

Fig. 6 shows steps performed by an optical line terminal, OLT, and an optical network unit, ONU, wherein a preconfigured encryption algorithm and/or preconfigured key may be configurable, according to example embodiments; and

Fig. 7 shows a suitable computing system enabling to implement example embodiments.

**Detailed Description of Embodiment(s)**

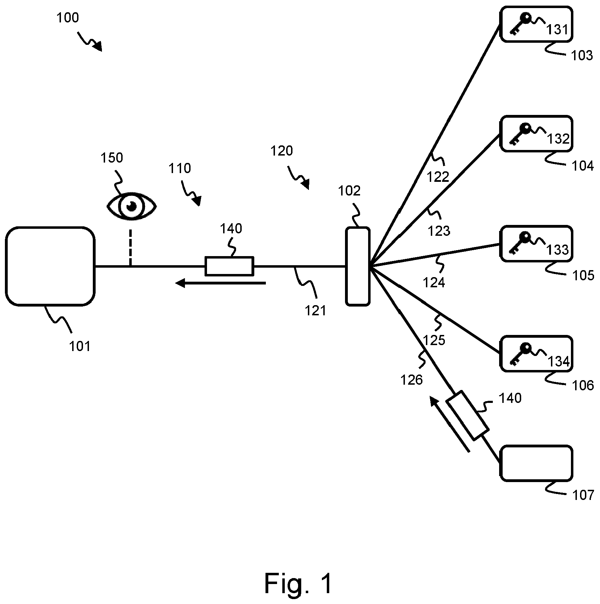

Fig. 1 shows a schematic block diagram of an example point-to-multipoint optical network 100, in particular a passive optical network, PON. The optical network 100 comprises an optical line terminal 101, OLT, and a plurality of optical network units, ONUs 103 - 107, connected via an optical distribution network, ODN 120. In this example, the OLT 101 is connected to five ONUs 103 - 107, however, the OLT 101 may be connected to fewer or more endpoints. The ODN 120 has a tree structure comprising an optical feeder fibre 121, one or more passive optical splitters/multiplexors 102, and a plurality of optical distribution fibres or drop fibres 122 - 126 that connect the splitter/multiplexor 102 to the respective ONUs 103 - 107. In the downstream, the passive optical splitter/multiplexor 102 splits the optical signal coming from the OLT 101 into lower power optical signals for the connected ONUs 103 - 107, while in the upstream direction, the passive optical splitter/multiplexor 102 multiplexes the optical signals coming from the connected ONUs 103 -107 into a burst signal for the OLT 101.

The passive optical network 100 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, or a next generation passive optical network, NG-PON. The passive optical network 100 may implement time-division multiplexing, TDM, or timeand wavelength-division multiplexing, TWDM.

In a passive optical network 100, a master session key 131 - 134, MSK, is typically derived during an authentication process for the respective ONUs 103 - 107. During such an authentication process the OLT 101 and a respective ONU 103 - 107 establish a secure communication channel. Such an authentication process may, for example, be a registration-based authentication procedure or a secure mutual authentication procedure according to the ITU-T G.9807.1 standard. During the authentication process, an ONU 107 exchanges one or more credentials 140 associated with the ONU 107, e.g. a registration identifier, with the OLT 101. The OLT 101 derives the master session key for ONU 107 from the received credentials 140. The ONU 107 independently derives the same master session key from the same credentials 140.

The one or more credentials 140 may be exchanged or transmitted in the clear, i.e. not encrypted. This has the problem that intercepting 150 or eavesdropping of the credentials 140, in addition to knowledge of ITU-T PON standards, allows generating the master session key. This compromises the security of the PON 100 as most other shared keys can be derived from the master session key. These other shared keys may be referred to as derived shared keys such as, for example, a session key, SK; an ONU management control interface integrity key, OMCI_IK; a physical layer operation administration and maintenance integrity key, PLOAM_IK; and a key encryption key, KEK.

To address this challenge, some solutions rely on a pre-shared key, PSK, to allow secure authentication. The PSK is provisioned into the OLT 101 and the respective ONUs 103 - 107, e.g. upon installation by field personnel. The PSK can then be used as an additional encryption key when generating the master session key 131 - 134 and/or the derived shared keys. The PSK makes eavesdropping 150 ineffective as the PSK is not exchanged between the ONUs 103 - 107 and the OLT 101. To provide adequate security, each ONU 103 - 107 within the PON 100 is assigned a unique PSK. This has the problem that the respective PSKs have to be provisioned into the OLT 101 for each ONU 103 - 107, which is time-consuming and operationally complex. It can thus be desirable to enable secure determination of shared keys in an optical network without time-consuming and operationally complex ONU provisioning.

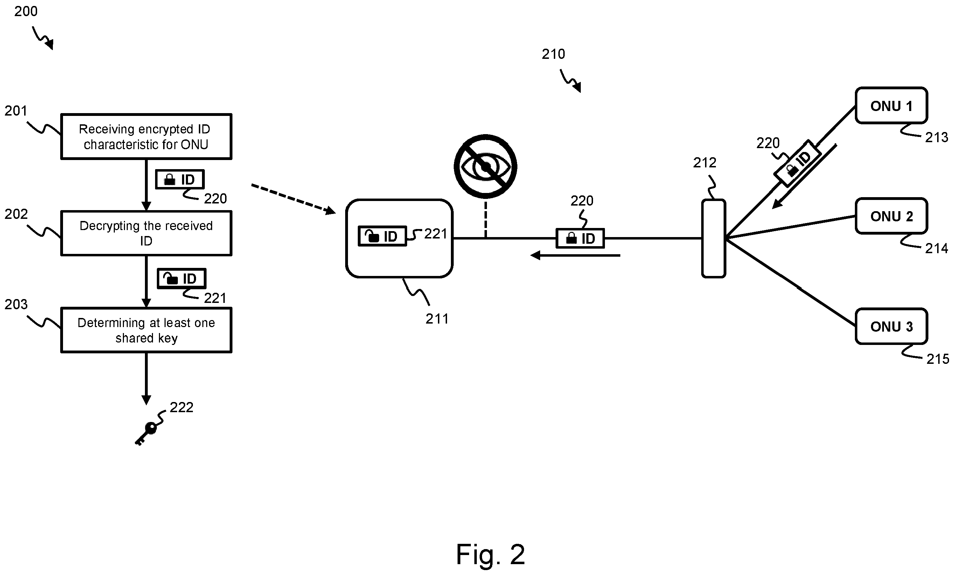

Fig. 2 shows an example embodiment of an optical line terminal 211 comprising means configured to perform steps 200 according to example embodiments. The OLT 211 is configured to communicate in a point-to-multipoint optical network with ONUs 213, 214, 215 such as, for example, the optical network 100 illustrated in Fig. 1. The OLT 211 and the respective ONUs 213, 214, 215 share respective sets of shared keys for enabling secure data exchange between the respective ONUs 213, 214, 215 and the OLT 211. In other words, each ONU 213, 214, 215 shares a set of shared keys with the OLT 211 that allows the ONUs 213, 214, 215 to exchange data securely with the OLT 211. Secure communication, secure data exchange, and network security may relate to protecting the optical network 210 against, amongst others, intercepting of downstream data, replacing of an ONU 213, 214, 215, re-programming of an ONU 213, 214, 215, forging of packets, impersonating an ONU 213, 214, 215, theft of service, intercepting traffic, generating traffic, impersonating an OLT 211, recording intercepted data, and replaying of intercepted data.

A set of shared keys thus allows establishing a secure communication channel between the OLT 211 and a respective ONU 213, 214, 215, e.g. by encrypting exchanged data according to an encryption algorithm and a shared key. The set of shared keys may include a master session key, MSK, and one or more derived shared keys. A derived shared key may be any encryption key that is determined directly or indirectly from the master session key such as, for example, a session key, SK; an ONU management control interface integrity key, OMCI_IK; a physical layer operation administration and maintenance integrity key, PLOAM_IK; and a key encryption key, KEK.

The means of OLT 211 are configured to perform receiving 201 at least one encrypted identifier 220 from a respective ONU 213. The OLT 211 may thus receive one or more encrypted identifiers 220 originating from ONU 213.

The identifier 220 may be any characteristic that allows to identify the respective ONU 213.

The identifier 220 may comprise a registration identifier associated with a respective ONU 213. The registration identifier, may also be referred to as Registration_ID or Reg_ID, may be a string of numbers and/or letters assigned to an ONU 213, 214, 215 on the management level that allows to identify the ONU 213, 214, 215 within an optical network 210. The registration identifier may, for example, be a string of ASCII characters having a length of 36 octets.

Alternatively or complementary, the identifier 220 may comprise a serial number associated with a respective ONU 213. Such a serial number allows identifying a particular ONU 213, 214, 215 within the optical network 210. The serial number may include, amongst others, a vendor specific identifier, also Vendor_ID, and/or a vendor-specific serial number, VSSN. The serial number may, for example, be a string of ASCII characters.

It will be apparent that the exchanged identifier 220 may only comprise a registration identifier, may only comprise a serial number, or may comprise both a registration identifier and a serial number. Alternatively or complementary, the identifier 220 may comprise one or more additional characteristics that allow to identify the ONU 213.

The identifier 220 is encrypted according to a preconfigured encryption algorithm and a preconfigured key. The identifier 220 may be encrypted by the ONU 213 before transmitting it upstream to the OLT 211. This improves the network security of the optical network 210 as intercepting the encrypted identifier 220 does not allow to generate any shared keys, thereby making eavesdropping ineffective.

The preconfigured encryption algorithm allows generating an encrypted output based on the preconfigured key. In other words, the preconfigured encryption algorithm generates an encrypted identifier 220 from an unencrypted identifier and the preconfigured key. The preconfigured key may be a string of numbers and/or letters only known to the OLT 211 and the ONU 213, e.g. a predetermined 128-bit value. The preconfigured encryption algorithm may, for example, be an encryption algorithm according to the Advanced Encryption Standard, AES, or the Data Encryption Standard, DES. For example, the preconfigured encryption algorithm may be the cipher-based message authentication code, CMAC, algorithm according to NIST SP800-38B with the advanced encryption standard encryption algorithm according to NIST FIPS-197 as the underlying block cipher. Such an AES-CMAC function may, for example, generate an output $T$ of length $Tlen$ based on a block cipher key $K$, e.g. the preconfigured key, and an information message M, e.g. the identifier 220, as follows:

$$T = AES - CMAC(K, M, Tlen) \qquad\qquad (Eq.\ 1)$$

The preconfigured encryption algorithm and the preconfigured key are configured in advance into the OLT 211 and into the respective ONUs 213, 214, 215, i.e. before provisioning or activating a respective ONU 213, 214, 215. This can, for example, be achieved by providing or storing the preconfigured key and encryption algorithm in a non-volatile memory of the OLT 211 and the respective ONUs 213, 214, 215 before provisioning the ONUs. Provisioning an ONU may refer to the process of configuring and activating an ONU 213, 214, 215 within an optical network 210 such that it can exchange data with other devices in the optical network 210, e.g. the OLT 211. This may, for example, include assigning an IP address to the ONU, configuring service options, and provisioning security settings.

The preconfigured encryption algorithm and the preconfigured key allow avoiding time-consuming and operationally complex provisioning processes, as the preconfigured encryption algorithm and key are configured into the OLT 211 and the respective ONUs 213, 214, 215 before provisioning the ONUs in an optical network 210.

The means of OLT 211 are further configured to perform decrypting 202 the received encrypted identifier 220. As the OLT 211 is aware of the preconfigured encryption algorithm and the preconfigured key, the received identifier 220 can be decrypted to obtain a decrypted identifier 221. It will be apparent that, receiving and decrypting a plurality of encrypted identifiers 220 results in a plurality of decrypted identifiers 221.

The means of OLT 211 are further configured to perform determining 203 at least one shared key 222 based on the at least one decrypted identifier 221. In other words, decrypting the encrypted identifier 216 allows the OLT 211 to determine one or more of the shared keys 222 of the set of shared keys. The at least one shared key 222 may, for example, be determined by a key derivation function. Different shared keys 222 may be determined depending on the identifier 220, 221 that is received by the OLT 211, e.g. a master session key, a session key, or a key encryption key.

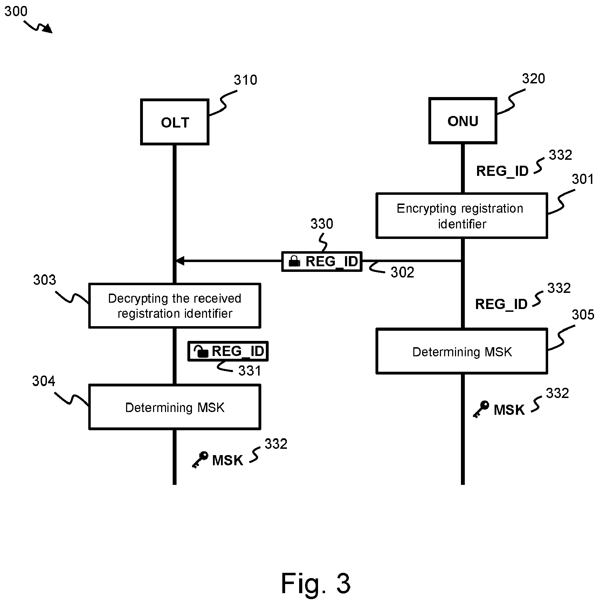

Fig. 3 shows steps 300 performed by an optical line terminal 310, OLT, and an optical network unit 320, ONU, according to example embodiments. The ONU 320 may be characterised by a registration identifier 332. The ONU 320 may comprise means configured to perform encrypting 301 the registration identifier 332 according to a preconfigured encryption algorithm and a preconfigured key. The means of ONU 320 may further be configured to transmit or send 302 the encrypted registration identifier 330 to the OLT 310. ONU 320 may include the encrypted registration identifier 330 in a registration PLOAM message during ONU activation in response to a ranging grant, or in response to a request from the OLT 310.

The OLT 310 may comprise means configured to perform receiving and decrypting 303 the encrypted registration identifier 330 according to the preconfigured encryption algorithm and the preconfigured key, thereby obtaining a decrypted registration identifier 331. Both the OLT 310 and the ONU 320 can then securely determine 304, 305 the master session key 332 based on the registration identifier, i.e. based on the decrypted registration identifier 331 and the unencrypted registration identifier 332 respectively. In other words, the functions to derive the master session key 332 are shared by the OLT 310 and the ONU 320. It will be apparent that the ONU 320 may determine the master session key 332 at a different moment in time compared to the OLT 310, e.g. upon power up of the ONU 320 or before sending 302 the encrypted registration identifier 330 to the OLT 310. The master session key 332 may, for example, be determined as

$$MSK = AES - CMAC(K, registration_{ID}, L) \qquad (Eq.\ 2)$$

wherein AES - CMAC is the cipher-based message authentication code, CMAC, algorithm with the advanced encryption standard, AES, as the underlying block cipher; $K$ represents a key or shared secret; $registration_{ID}$ represents the registration identifier 332 of ONU 310; and L represents the bit length of the determined MSK.

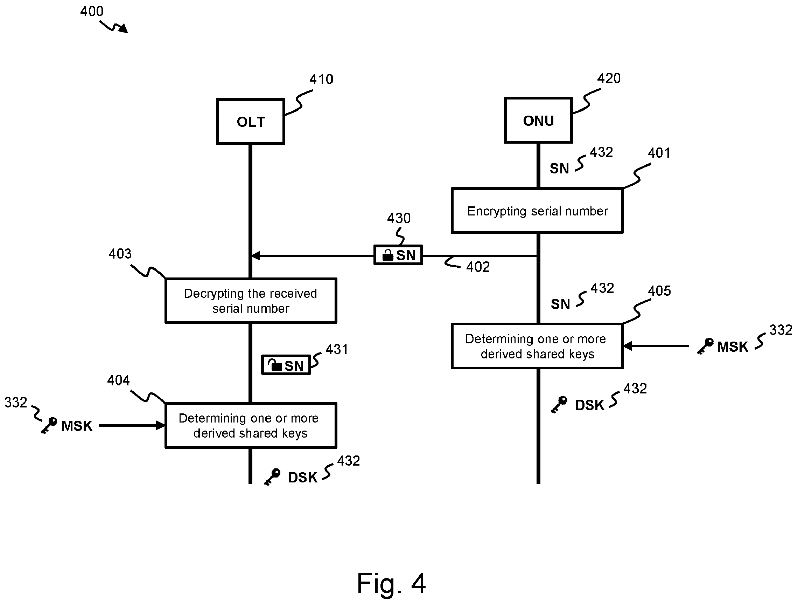

Fig. 4 shows steps 400 performed by an optical line terminal 410, OLT, and an optical network unit 420, ONU, according to example embodiments. The ONU 420 may be characterised by a serial number 432. The ONU 420 may comprise means configured to perform encrypting 401 the serial number 432 according to a preconfigured encryption algorithm and a preconfigured key. The means of ONU 420 may further be configured to transmit or send 402 the encrypted serial number 430 to the OLT 410. ONU 420 may include the encrypted serial number 430 in a PLOAM message upon request from the OLT 410, e.g. upon completion of the ONU activation before user data traffic is transmitted.

The OLT 410 may comprise means configured to perform receiving and decrypting 403 the encrypted serial number 430 according to the preconfigured encryption algorithm and the preconfigured key, thereby obtaining a decrypted registration identifier 431. Both the OLT 410 and the ONU 420 can then securely determine 404, 405 one or more derived shared keys, DSKs 432. In other words, the one or more functions to derive the master session key 332 are shared by the OLT 310 and the ONU 320. The OLT 410 may determine these derived shared keys 432 based on the decrypted serial number 431 and a master session key 332. The ONU 420 may determine these derived shared keys 432 based on the unencrypted serial number 432 and a master session key 332. It will be apparent that derived shared keys 432 may be determined directly from the MSK 332, or indirectly from the MSK 332. In other words, a first derived shared key may directly be determined from the master session key 332, and one or more subsequently derived shared keys may be determined based on the first derived shared key, i.e. indirectly from the MSK 332. For example, a session key, SK, can directly be determined from the master session key 332 as

$$SK = AES - CMAC(MSK, SN, L) \qquad (Eq.\ 3)$$

wherein the information message may comprises additional elements in additions to the serial number, SN. The key encryption key, KEK, may then be determined from the SK, i.e. indirectly determined from the master session key 332, as

$$KEK = AES - CMAC(SK, M, L) \qquad (Eq.\ 4)$$

wherein the information message M may be the ASCII representation of the string "KeyEncryptionKey". As such, the KEK is indirectly derived from the MSK 332. Similarly, it will be apparent that a derived shared key 432 may be determined directly from the serial number 430, 431, e.g. the SK in Eq. 3, or indirectly from the serial number 430, e.g. the KEK in Eq. 4.

The master session key 332 that is used to determine 404, 405 the derived shared keys 432 may have previously been determined by a registration-based authentication procedure according to the ITU-T G9807.1 standard, i.e. based on a registration identifier send in the clear. Alternatively, this master session key 332 may have previously been determined by the OLT 410 and ONU 420 based on an encrypted registration identifier, i.e. as described in relation to Fig. 3.

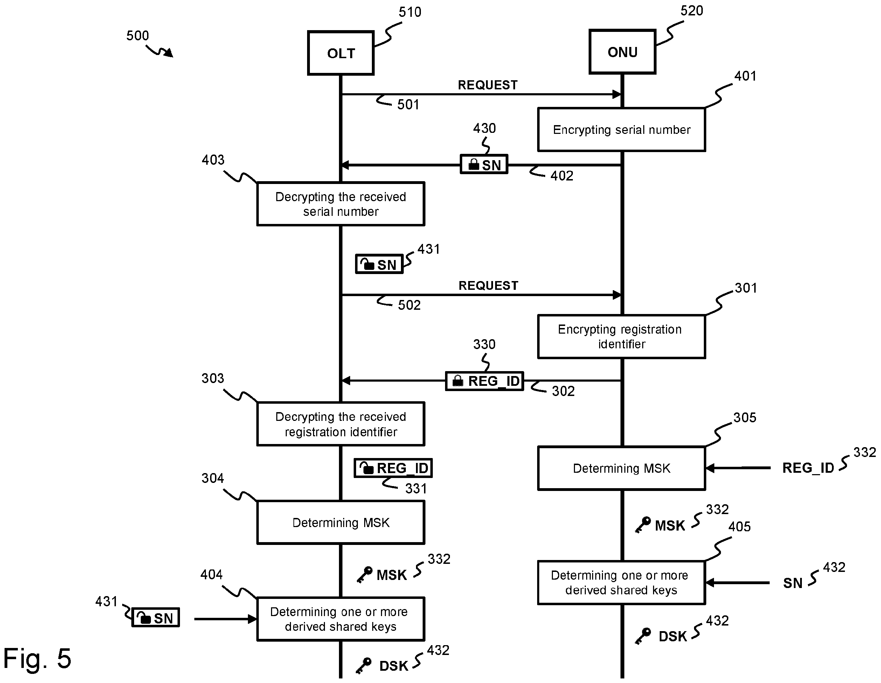

Fig. 5 shows steps 500 performed by an OLT 510 and an ONU 520 according to example embodiments wherein one or more derived shared keys 432 are determined based on a securely determined MSK 332, i.e. an MSK 332 determined based on an encrypted registration identifier 330. The OLT 510 may request 501 the serial number from the ONU 520, e.g. by sending a PLOAM message during ONU activation. In response to the request 501, ONU 520 may encrypt 401 the serial number according to the preconfigured key and encryption algorithm; and send 402 the encrypted serial number 430 to the OLT 510. The OLT 510 may then decrypt 403 the serial number 431. Thereafter, e.g. in response to an additional request 502, the ONU 520 may encrypt 301 the registration identifier according to the preconfigured key and encryption algorithm; and send 302 the encrypted registration identifier 330 to the OLT 510. The OLT 510 may then decrypt 303 the registration identifier 331. Alternatively, the encrypted registration identifier 330 and the encrypted serial number 430 may both be send to the OLT 510 within a single message or response.

The OLT 510 can then determine the MSK 332 based on the decrypted registration identifier 331 in step 304, e.g. according to Eq. 2. The OLT 510 can further determine one or more derived shared keys 432 based on the determined MSK 332 and the decrypted serial number 431 in step 404, e.g. according to Eq. 3.

The ONU 520 can determine the same MSK 332 based on the registration identifier 332 in step 305, e.g. according to Eq. 2. The ONU 520 can further determine the same one or more derived shared keys 432 based on the determined MSK 332 and the serial number 432 in step 405, e.g. according to Eq. 3.

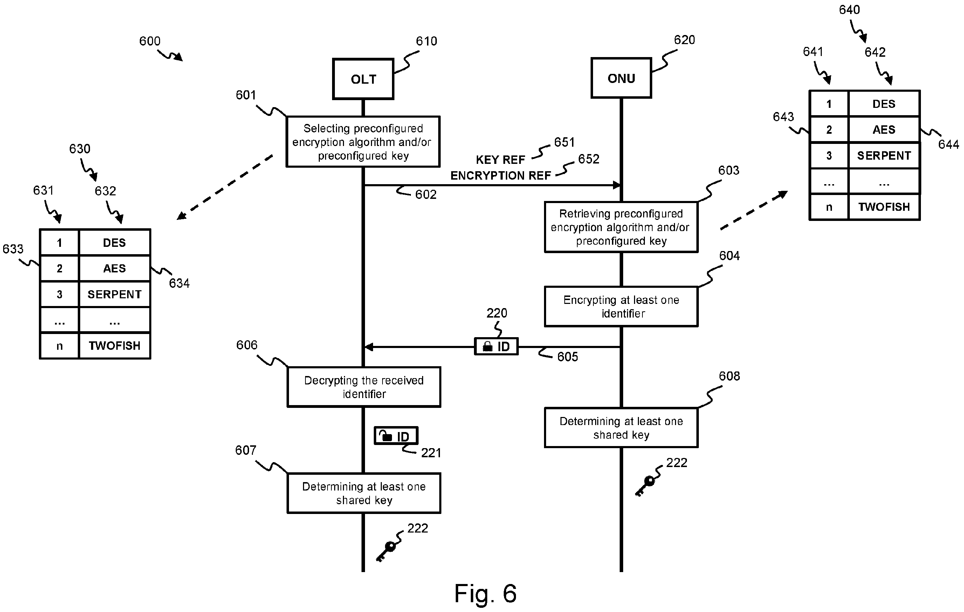

Fig. 6 shows steps 600 performed by an OLT 610 and an ONU 620 wherein the preconfigured encryption algorithm and/or the preconfigured key may be configurable, according to example embodiments. To this end, the means of OLT 610 may be configured to, for a respective ONU 620, select 601 a preconfigured encryption algorithm from a plurality of preconfigured encryption algorithms and/or to select a preconfigured key from a plurality of preconfigured keys. This plurality of possible preconfigured encryption algorithms and preconfigured keys may thus be configured into the OLT 610 in advance, i.e. before provisioning or activating the respective ONU 620. This plurality of possible preconfigured encryption algorithms and preconfigured keys may, for example, be a list 630 of possible preconfigured encryption algorithms that is stored in a memory of the OLT 610. The means of OLT 610 may thus be configured to select 601 a preconfigured encryption algorithm from list 630, e.g. AES 634. The possible preconfigured encryption algorithms may be kept in a first list 630 and the possible preconfigured keys may be kept in a second list (not shown in Fig. 6). Alternatively, the possible preconfigured encryption algorithms and keys may be kept in the same list.

The means of OLT 610 may further be configured to provide 602 the selected preconfigured encryption algorithm and/or the selected preconfigured key to ONU 620. This can be achieved by exchanging an encryption reference 652 indicative for the selected preconfigured encryption algorithm and/or a key reference 651 indicative for the selected preconfigured key. These references 651, 652 may, for example, be a string of numbers and/or letters indicative for the selected encryption algorithm and/or the selected key respectively. For example, the encryption reference 652 may be an index 631 of list 630 such as index "2" to indicate that "AES" is the selected encryption algorithm. The references 651, 652 may be provided to the ONU 620 by means of a control message. For example, a dedicated PLOAM message may be send to ONU 620, or by including references 651, 652 within free bits in an existing PLOAM message such as padding bits.

The list 640 of possible preconfigured encryption algorithms and keys may also be configured into the ONU 620 in advance, i.e. before provisioning or activating the ONU 620. As such, the provided indices 651, 652 enable the ONU 620 to determine 603 which encryption algorithm and/or key are selected by the OLT 610. In other words, the means of ONU 620 may be configured to match the selected preconfigured encryption algorithm and key for encrypting 301 the identifier 330. This allows secure exchange of the selected preconfigured encryption algorithm and/or preconfigured key, as the selected encryption algorithm and/or key can not be deduced or derived by intercepting the references 651, 652.

This further allows adjusting the preconfigured algorithm and/or the preconfigured key for different ONUs 620 within an optical network without substantially increasing the operational complexity of ONU provisioning, as the possible preconfigured encryption algorithms and keys are configured into the OLT 610 and the respective ONUs 620 in advance. This has the further advantage that it can improve the network security of the optical network. It is a further advantage that example embodiments can be easily incorporated into existing optical networks without substantial operational changes to the ONU provisioning process of a network provider.

Alternatively, the means of ONU 620 may be configured to select a preconfigured encryption algorithm and/or preconfigured key and to provide the selected algorithm and key to the OLT 610. In other words, ONU 620 may select a preconfigured encryption algorithm and key, e.g. from list 640, and provide the selected algorithm and key to OLT 610. In this case, the means of OLT 610 may be configured to match the selected preconfigured encryption algorithm and key for decrypting 303 the identifier 330.

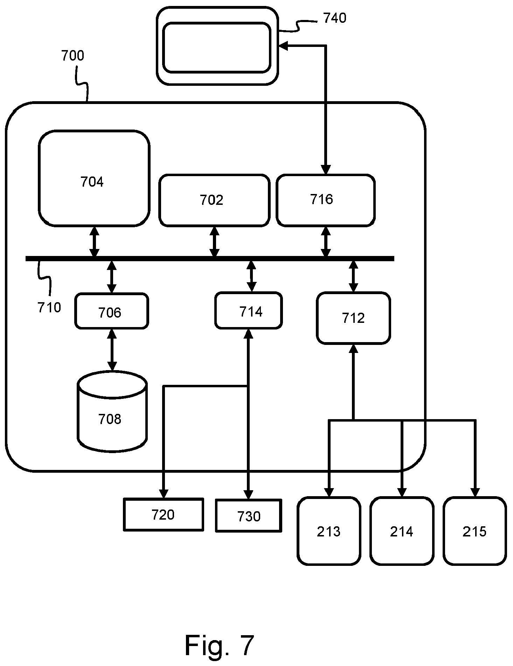

Fig. 7 shows a suitable computing system 700 enabling to implement example embodiments of the method for secure determining of shared keys in an optical network. Computing system 700 may in general be formed as a suitable generalpurpose computer and comprise a bus 710, a processor 702, a local memory 704, one or more optional input interfaces 714, one or more optional output interfaces 716, a communication interface 712, a storage element interface 706, and one or more storage elements 708. Bus 710 may comprise one or more conductors that permit communication among the components of the computing system 700. Processor 702 may include any type of conventional processor or microprocessor that interprets and executes programming instructions. Local memory 704 may include a random-access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator or user to input information to the computing device 700, such as a keyboard 720, a mouse 730, a pen, voice recognition and/or biometric mechanisms, a camera, etc. Output interface 716 may comprise one or more conventional mechanisms that output information to the operator or user, such as a display 740, etc. Communication interface 712 may comprise any transceiver-like mechanism such as for example one or more Ethernet interfaces that enables computing system 700 to communicate with other devices and/or systems, for example with optical network units, ONUs 213, 214, 215. The communication interface 712 of computing system 700 may be connected to such another computing system by means of a local area network (LAN) or a wide area network (WAN) such as for example the internet. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage element(s) 708 above is/are described as a local disk, in general any other suitable computer-readable media such as a removable magnetic disk, optical storage media such as a CD or DVD, -ROM disk, solid state drives, flash memory cards, ... could be used. Computing system 700 could thus correspond to the means of the optical line terminal 211 in the embodiments illustrated by Fig. 2.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An optical line terminal (211), OLT, configured to communicate in a point-to-multipoint optical network (210) with optical network units (213, 214, 215), ONUs; wherein the OLT and a respective ONU share a set of shared keys; the OLT comprising means configured to perform:

   - receiving (201), from a respective ONU, at least one identifier (220) encrypted according to a preconfigured encryption algorithm and a preconfigured key; wherein the at least one identifier is characteristic for the respective ONU;
   - decrypting (202) the at least one received identifier according to the preconfigured encryption algorithm and the preconfigured key; and
   - determining (203) at least one shared key (222) based on the at least one decrypted identifier (221).

2. The optical line terminal, OLT, according to claim 1, wherein the at least one identifier (220) comprises a registration identifier characteristic for the respective ONU (213, 214, 215).

3. The optical line terminal, OLT, according to claim 2, wherein the means are configured to perform determining (304) a master session key (332) based on the decrypted registration identifier (331).

4. The optical line terminal, OLT, according to any of the preceding claims, wherein the at least one identifier (220) comprises a serial number characteristic for the respective ONU (213, 214, 215).

5. The optical line terminal, OLT, according to claim 4, wherein the means are configured to perform determining (404) one or more shared keys (432) based on the decrypted serial number (431) and a master session key (332).

6. The optical line terminal, OLT, according to any of the preceding claims, wherein the preconfigured key and the preconfigured encryption algorithm are identical for the ONUs (213, 214, 215) and the OLT (211) within the point-to-multipoint network.

7. The optical line terminal, OLT, according to any of the preceding claims, wherein the preconfigured encryption algorithm and/or the preconfigured key are configurable for the OLT (211) and the respective ONUs (213, 214, 215).

8. The optical line terminal, OLT, according to claim 7, wherein the means are further configured to, for a respective ONU (620), select (601) a preconfigured encryption algorithm and/or a preconfigured key; and to provide (602) the selected preconfigured encryption algorithm and/or the selected preconfigured key to the respective ONU.

9. The optical line terminal, OLT, according to claim 8, wherein the means are further configured to provide, to the respective ONU, an encryption reference (652) indicative for the selected preconfigured encryption algorithm and/or a key reference (651) indicative for the selected preconfigured key.

10. An optical line terminal, OLT, according to any of the preceding claims, wherein the means comprise at least one processor, and at least one memory including computer program code; the at least one memory and computer program code being configured to, with the at least one processor, cause the performance of the OLT according to any of claims 1 - 9.

11. An optical network unit, ONU (620), configured to communicate in a point-to-multipoint optical network with an optical network terminal, OLT (610) according to any of claims 1 - 10; wherein the OLT and the ONU share a set of shared keys; the ONU comprising means configured to perform:

   - encrypting (604) at least one identifier (220) according to a preconfigured encryption algorithm and a preconfigured key, wherein the at least one identifier is characteristic for the ONU;
   - sending (605) the encrypted at least one identifier (220) to the OLT; and
   - determining (608) at least one shared key (222) based on the at least one identifier.

12. A method comprising:

   - encrypting (604) at least one identifier (220) according to a preconfigured encryption algorithm and a preconfigured key by an optical network unit, ONU (620), configured to communicate in a point-to-multipoint optical network with an optical network terminal, OLT (610); wherein the OLT and the ONU share a set of shared keys; and wherein the at least one identifier is characteristic for the ONU;
   - by the OLT (610), receiving the encrypted at least one identifier (220) from the ONU (620); and decrypting (606) the at least one received identifier according to the preconfigured encryption algorithm and the preconfigured key; and
   - determining (607), by the OLT (610), at least one shared key (222) based on the at least one decrypted identifier (221); and
   - determining (608), by the ONU (620), the at least one shared key (222) based on the at least one identifier.

Fig. 1

**200**

**201** Receiving encrypted ID characteristic for ONU

🔒 ID **220**

**202** Decrypting the received ID

🔓 ID **221**

**203** Determining at least one shared key

🔑 **222**

**210**

**213** ONU 1

**220** 🔒 ID

**212**

**214** ONU 2

**220** 🔒 ID

**211** 🔓 ID **221**

**220** 🔒 ID

**215** ONU 3

EP 4 422 120 A1

Fig. 2

Fig. 3

400

420 ONU
SN 432
Encrypting serial number — 401
SN 432
402
🔒SN 430
Determining one or more derived shared keys — 405
🔑 DSK 432
🔑 MSK 332

410 OLT
Decrypting the received serial number — 403
🔒SN 431
Determining one or more derived shared keys — 404
🔑 DSK 432
🔑 MSK 332

Fig. 4

Fig. 5

Fig. 6

EP 4 422 120 A1

Fig. 7

Europäisches Patentamt
European Patent Office
Office européen des brevets

# EUROPEAN SEARCH REPORT

Application Number

EP 23 15 8842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 274 489 B (UNIV CHONGQING POSTS & TELECOM) 28 May 2021 (2021-05-28)<br>* abstract; figures 2,3 *<br>* Description in conjunction with figures 2 and 3, steps 104-106 *<br>----- | 1-12 | INV.<br>H04L9/08<br>H04L9/14<br>H04B10/85 |
| X | WO 2011/017847 A1 (HUAWEI TECH CO LTD [CN]; OU PENG [CN])<br>17 February 2011 (2011-02-17)<br>* abstract; figure 5 *<br>* Description in cnjunction with figure 5, steps 501-518 *<br>----- | 1-12 | |
| X | US 2005/008158 A1 (HUH JAE DOO [KR] ET AL) 13 January 2005 (2005-01-13)<br>* abstract; figures 3,5 *<br>* paragraphs [0016] - [0020], [0043] - [0049] *<br>----- | 1-12 | |
| A | EP 2 091 176 A1 (BRITISH TELECOMM [GB]) 19 August 2009 (2009-08-19)<br>* abstract; figure 2 *<br>* paragraphs [0008] - [0013], [0026] - [0028], [0035] - [0042] *<br>----- | 1-12 | TECHNICAL FIELDS SEARCHED (IPC)<br><br>H04L<br>H04B |

The present search report has been drawn up for all claims

| Place of search | Date of completion of the search | Examiner |
|---|---|---|
| Munich | 8 August 2023 | Wolters, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 8842

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2023

| Patent document cited in search report | | | Publication date | Patent family member(s) | | | Publication date |
|---|---|---|---|---|---|---|---|
| CN 109274489 | B | | 28-05-2021 | NONE | | | |
| WO 2011017847 | A1 | | 17-02-2011 | CN | 102239661 | A | 09-11-2011 |
| | | | | WO | 2011017847 | A1 | 17-02-2011 |
| US 2005008158 | A1 | | 13-01-2005 | KR | 20050006613 | A | 17-01-2005 |
| | | | | US | 2005008158 | A1 | 13-01-2005 |
| | | | | US | 2007201698 | A1 | 30-08-2007 |
| EP 2091176 | A1 | | 19-08-2009 | NONE | | | |

EPO FORM P0459

For more details about this annex : see Official Journal of the European Patent Office, No. 12/82